# EUROPEAN PATENT APPLICATION

(11) **EP 4 723 406 A1**
(43) Date of publication of application: **08.04.2026**
(21) Application number: 25201510.2
(22) Date of filing: 10.09.2025
(51) Int. Cl.: H02G 3/32

(54) **ONE-PIECE PUSH-FIT CABLE TIE MOUNT**

(30) Priority: 02.10.2024 GB 202414515
(71) Applicant: Hellermanntyton Limited, Crawley West Sussex RH10 1DQ (GB)
(72) Inventor: CIPRIANI, Stefano, Manchester, M22 4TY (GB)
(74) Representative: Murgitroyd & Company

(57) **Abstract**

A one-piece mount for mounting a cable tie to a mounting surface comprises a head section defining a strap receiving channel. A pair of laterally spaced legs extend from the head to a distal end of the mount. A pair of locating arms associated respectively with the pair of legs extending laterally from a side of each respective leg. Each leg includes a retaining spring tab extending outwardly an upwardly from the leg. The spring tabs are movable towards the leg from an expanded configuration to a compressed configuration, to allow the legs to be inserted through a mounting aperture in a mounting surface. The spring tabs and the arms are spaced along the legs. The arms are located between the spring tabs and the head, and engage and locate against the outside of a mounting surface. The spring tabs engage an underside of the mounting surface in the expanded configuration to prevent removal of the mount from the mounting aperture.

## Description

### FIELD OF INVENTION

The present disclosure relates to a one-piece cable tie mount, and in particular to a push-fit mount formed from a single blank.

### BACKGROUND

Push fit cable tie mounts enable quick installation of a mounting solution to a support surface such as a panel. These mounts are particularly beneficial when access to the rear of the panel is not available, as push fit connectors to not does not require user interaction with the rear of the mount. Cable ties provide a quick and secure means of securing objects such as cabling, but require a mounting structure they can be looped through. Cable tie mounts are configured to secure to a mounting surface and include a mounting structure having channel or connection aperture some form through which a cable tie can be passed.

Push-fit cable tie mounts typically include a main body comprising the mounting aperture and deformable arrowhead connection feature. The arrowhead has arms configured to deform and compress inwards as it is pushed through an aperture in a substrate such as a panel. After passing through the aperture the arms expand and return to their undeformed state and engages with the opposing side of the panel. This engagement prevents removal of the cable tie mount from the aperture. Additionally, cable tie mounts include a head section and a flange, projection, arm or other engagement element that engages with the front surface of the panel and prevents the head of the cable tie mount passing further through the aperture. The engagement element and the arrowhead engage the panel on opposing sides to secure the cable tie mount in place.

The inclusion of an upper projection/engagement element, an arrowhead fixing and a head including a channel for receiving a cable tie, results in a device that can be complex and expensive to manufacture for a high volume item. Consequently, many cable tie mounts are manufactured from polymers using injection moulding. Compared to more resilient materials (such as metals) these polymeric mounts have reduced durability and poor fire-resistance.

Fire resistant mounts are known, formed from a metal material that is robust and fire resistant. Such mounts are formed from metal blanks in a series of forming operations. US patent number 5759004 describes a one piece metal cable tie mount. The mount is formed from a unitary piece of sheet metal that is folded along its length. Distal ends of the blank are bent to form arrowhead 'legs' that engage the rear side of a panel. Secondary spring legs are formed to engage the front side of the panel. The secondary spring legs are punched from sections of the arrowhead legs and bent outwardly, resulting in a cutaway section in the legs. Removing material from the arrowhead legs in this manner weakens the legs in the regions either side of the cutaway. Consequently, the size of the mounts is limited to a minimum width, beyond which the remaining material in the regions adjacent the cutaway sections become too weak to withstand the bending operations of manufacture and/or the rigours of use.

It is therefore desirable to provide an improved cable tie mount that addresses the above-described problems and/or which offers improvements generally.

### SUMMARY

In an aspect of the disclosure there is a one-piece mount for mounting a cable tie to a mounting surface. The mount is a one-piece mount. The mount comprises a head section formed at a first end of the mount to define a channel for receiving a strap such as a cable tie but is not limited to this use. A pair of laterally spaced legs extend from opposing sides of the head to a second distal end of the mount. A longitudinal axis of the mount is defined lengthwise along the legs. A pair of locating arms associated respectively with the pair of legs is provided, each arm extending laterally from the respective leg relative to the longitudinal axis. A pair of retaining spring tabs associated respectively with the pair of legs extend outwardly from the legs. The spring tabs are movable towards the respective leg from an expanded configuration to a compressed configuration, to allow the legs to be inserted through a mounting aperture in a mounting surface. The spring tabs and the arms are spaced apart from each other lengthwise along the legs. The arms are positioned towards the first end relative to the spring tabs and are arranged to engage and locate against the outside of a mounting surface. The spring tabs are arranged to engage an underside of the mounting surface in the expanded configuration when the legs are inserted through a mounting aperture to prevent removal of the mount from the mounting aperture. The laterally extending arms are independent elements and do not require removal of material from the head or the legs. As such the strength of the legs is not comprised and the mount may be sized to fit within apertures smaller than is possible for mounts of the prior art. The mount may be a push-fit mount. Each spring tab may be resiliently flexible towards the respective leg.

Each tab may be formed from an inboard portion (i.e. it is not formed at an edge or an end) of the respective leg.

Each tab may be bent away from its respective leg such that it extends outwardly away from the leg and is angled upwardly towards the first end. The bend forms a hinge about which the tab pivots between the expanded and compressed configurations. Each tab may be resiliently bent away from its respective leg.

Each spring tab may cut, such as by punching, from the within the leg and resiliently bent outwards from the inboard section of the respective leg. The tabs may be resiliently biassed to the expanded position. As such tabs can be compressed as the mount is pushed into mounting aperture of the mounting surface and then "spring" back into position to engage the underside of the mounting surface to retain the mount within the aperture. At the same time the arms engage the outer surface of the mounting surface to locate the mount and prevent further insertion. The mount is therefore clamped to opposing sides of the mounting surface by the arms and the spring tabs.

The legs may terminate at the second end (i.e. the distal end) and the tabs may be spaced lengthwise from the second. The legs may be substantially straight and unbent along the longitudinal axis.

The arms may extend from the legs at a position proximate the head. Locating the legs proximate the head minimises the height profile of the mount from the mounting surface. The arms may extend away from opposing sides of the mount in opposing directions.

The head has a first width and the legs may have a second width that is greater than the first width. This maximises the surface engagement of the legs within the mounting aperture to optimise stability.

The legs may have longitudinally extending sides and each arm may project from a side of the respective leg. A bend may be formed at the intersection between the arms and the legs such that the arms extend laterally at an angle relative to the legs.

The legs may be spaced from each other to define a compression gap, which allow the legs to be compressed towards each other to reduce the effective diameter of the mount as it is inserted through a mounting aperture. The sides of the legs may be spaced from each other to define a pair of compression gaps.

The head, the pair of legs and the spring tabs may be integrally formed from a single blank of metal. This may be by a series of bending and cutting/punching operations.

Each leg may have an outer surface and an inner surface, first and second sides extending lengthwise along the leg, a proximal end connected to the head and a free distal end. Each arm may extend laterally from a side of the respective leg and are formed without removing material from the legs or head.

The legs may have a curved convex cross sectional shape perpendicular to the longitudinal axis, forming a curved outer surface to the lags. The legs may in combination form a substantially cylindrical body, which allows the body of the mount to fit within and conform to the shape of a circular mounting aperture.

The proximal end of each arm may extend from the respective leg in a direction substantially perpendicular to the longitudinal axis and perpendicular the edge, and the distal end of each arm may extend downwardly towards the second end in a direction substantially parallel to the longitudinal axis. Thus, the arm may bend through approximately 90 degrees. The distal end of each arm may extend downwardly and terminates at an engagement tip, which abuts the mounting surface and supports the mount on the mounting surface. The arm thus may have a point contact and hence can more readily accommodate nonplanar mounting surfaces.

The longitudinal axis of the mount may define an insertion axis along which the mount is inserted into the mounting aperture. The distal ends of the legs may define the lead edge during insertion. The distal ends may be tapered to ease insertion of the legs into the mounting aperture.

The cable tie mount may be formed from a single elongate blank. The head portion may be formed by virtue of first and second bends. The pair of legs may extend from the first and second bends respectively to a distal end and the spring tabs may be formed from portions of the legs inwardly of the sides and ends of the legs by third and fourth bends respectively. The legs may be bent along their lateral axis to form a curved outer surface in a further bending operation. The third and fourth bends may extend laterally across the legs parallel to the first and second bends.

### BRIEF DESCRIPTION OF DRAWINGS

The present disclosure will now be described by way of example only with reference to the following illustrative figures in which:
**Figure 1** shows a push-fit cable tie mount inserted into a panel, where a cable tie secures a cable to the cable tie mount, according to an aspect of the present disclosure;

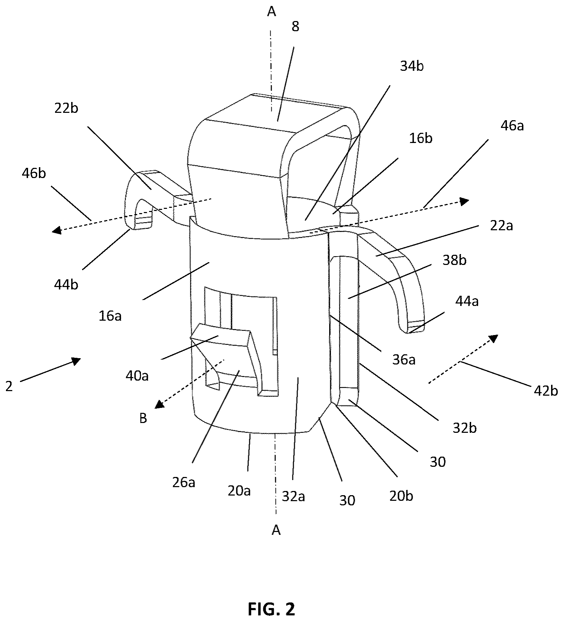

**Figure 2** shows a push-fit cable tie mount according to an aspect of the present disclosure;
**Figure 3** shows a cross-sectioned push-fit cable tie mount being inserted into a panel according to an aspect of the present disclosure;
**Figure 4** shows a push-fit cable tie mount inserted into a panel according to an aspect of the present disclosure; and
**Figure** 5 shows a push-fit cable tie mount blank according to an aspect of the present disclosure.

### DESCRIPTION OF EMBODIMENTS

The following description presents exemplary embodiments and, together with the drawings, serves to explain principles of the disclosure. The scope of the disclosure is not intended to be limited to the precise details of the embodiments or exact adherence with all method steps. Variations will be apparent to a skilled person and are deemed also to be covered by the description. Terms for features used herein should be given a broad interpretation that also encompasses equivalent functions and features. In some cases, several alternative terms (synonyms) for structural features have been provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "upper" and "lower" are relative terms that may be used for convenience of explanation usually with reference to the illustrations and are not intended to be ultimately limiting if an equivalent function can be achieved with an alternative dimension and/or direction.

The description herein refers to embodiments with particular combinations of configuration steps or features. However, it is envisaged that further combinations and cross-combinations of compatible steps or features between embodiments will be possible. The description of multiple features in relation to any specific embodiment is not an indication that such features are inextricably linked, and isolated features may function independently from other features and not necessarily require implementation as a complete combination.

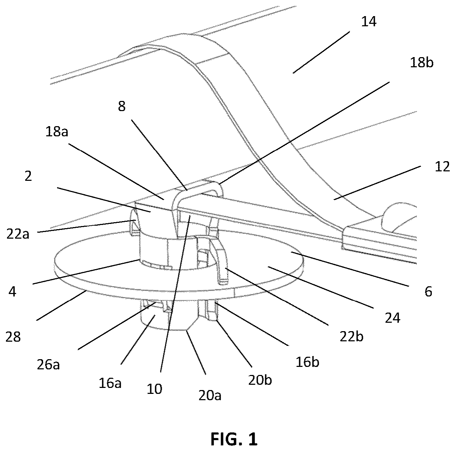

Referring to Figure 1, a push-fit cable tie mount 2 is formed as a unitary component from a metal blank. The mount 2 comprises a substantially u-shaped head 8 formed to define a channel 10 for receipt of a cable tie. The mount 2 has a longitudinal axis A-A which in use defines an insertion axis along which the mount 2 is inserted into a mounting aperture of a panel. A pair of legs 16a, 16b extend longitudinally from opposing ends 18a, 18b of the head 8 respectively to respective ends 20a, 20b. The distal ends 20a, 20b of each of the legs 16a, 16b are tapered 30, having chamfered corners, to ease insertion of the legs 16a, 16b into an aperture 4. The legs 16a, 16b are geometrically identical, but non-identical may legs be utilised. The legs 16a, 16b are curved width wise along their length having a substantially semi cylindrical form, with legs being spaced from each other to define a compression gap. The outer diameter of the legs 16a,16b is sized to conform to the diameter of the panel aperture such that a close fit is provided between the legs 16a,16b and aperture. Close engagement of the legs 16a,16b with the aperture stabilises the cable tie mount 2 within the panel 6 is improved and it is less prone to unstable movements (e.g. rocking).

Each leg 16a, 16b had an inner curved surface 34a, 34b, where the inner curved surfaces 34a, 34b of the legs 16a, 16b face one another. Bridging the outer curved surface 32a, 32b and the inner curved surface 34a, 34b a first side 36a, 36b and a second side 38a, 38b extend along each of the legs 16a, 16b. The tabs 26a, 26b each extend from a central location in each of the legs 16a, 16b to a distal end 40a, 40b. Each tab 26a, 26b is bent in an outward direction 42a, 42b, away from the outer surface 32a, 32b of their respective legs 16a, 16b. Arms 22a, 22b extend laterally outwards from the proximal end of the legs 16a, 16b respectively in a direction perpendicular to the longitudinal axis. Spring tabs 26a, 26b extends outwardly and upwardly from the legs 16a, 16b respectively at an oblique angle to the longitudinal axis.

The first arm 22a extends from a first side 36a of the leg 16a. The second arm 22b extends from a second side 36b of the leg 16b. The arms 22a,22b extend from the legs 16a,16b to respective distal ends 44a, 44b. The arms 22a, 22b extend directly from the side edges 36a,36b in a horizontal direction perpendicular to the axis A-A and are bent to proximate the edges 36a,36b to extend radially away from the mount 2 i.e. relative to the radius of the cylindrical body defined by the semi-cylindrical legs 16a,16b. Bending the arms 22a,22b away in this manner increases the radial projection of the arms 22a, 22b and maxims the distance of the distal ends of the arms 22a,22b from the legs 16a,16b. The increased radial projection of the arms 22a, 22b enhances the stability of the cable tie mount 2 by moving surface loading away from the aperture 4. The distal ends 44a, 44b of the arms 22a, 22b are curved downwards in a direction parallel to axis A-A.

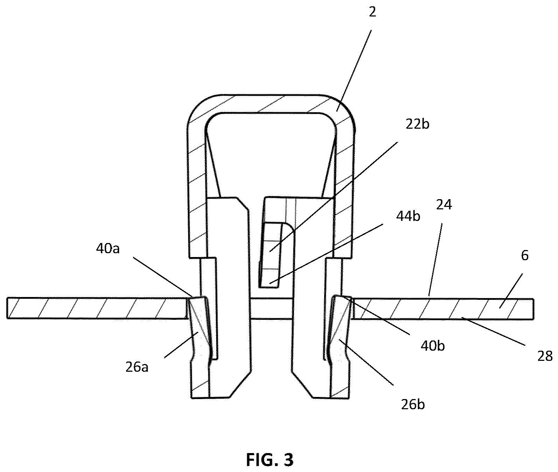

Referring to Figure 3, the cable tie mount 2 has been partially inserted into a panel 6. The deflection of the cable tie mount 2 enables its insertion through the aperture 4. Specifically the tabs 26a, 26b are deflected inwardly such that they pass through the aperture 4. Whilst the tabs 26a, 26b deflect to pass through the aperture 4, it will be appreciated that the legs 16a, 16b could alternatively, or additionally, deflect to enable the passage of the tabs 26a, 26b through the aperture 4. For example, the quantity of material in the head 8 or tab 26a, 26b may be altered such that one deflects more than the other. Thus the deflected portion of the cable tie mount 2 can be readily altered.

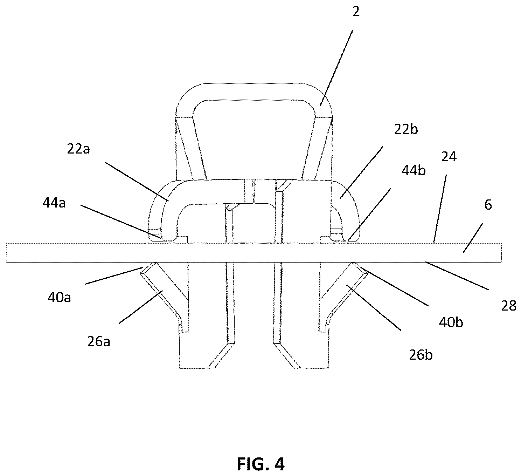

Referring to Figure 4, the tabs 26a, 26b have passed through the aperture 4 and the cable tie mount 2 has returned to its undeflected configuration. The curved distal ends 44a, 44b of each arm 22a, 22b form point contacts with the mounting surface 24 of the panel 6, accounting for any unevenness in the mounting surface 24. Countering the contact formed by the arms 22a, 22b, the distal ends 40a, 40b of the tabs 26a, 26b engage an opposing surface 28 of the panel 6. Thus the panel 6 is retained between the tabs 26a, 26b and the arms 22a, 22b, axially securing the cable tie mount 2 relative to the panel 6. A separation gap may be defined between the tabs 26a, 26b and the panel 6, or the arms 22a, 22b and the panel 6, depending on the installation orientation and/or the thickness of the panel 6.

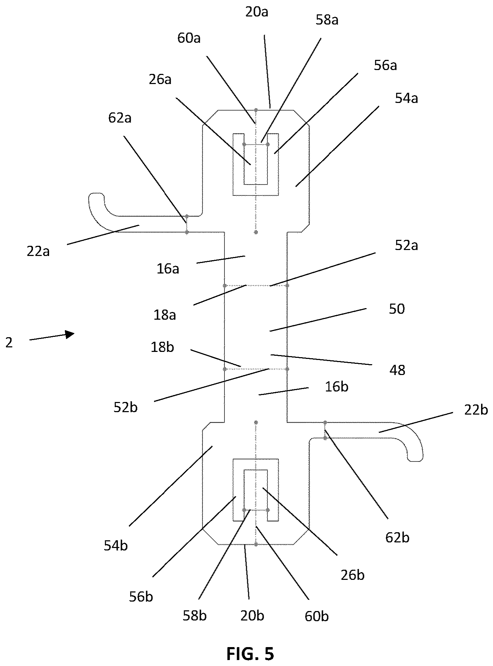

Referring to Figure 5, an elongate blank 48 for forming the cable tie mount 2 is shown. This blank 48 is punched from a sheet of material (for example metal) and is bent into shape. The cable tie mount 2 is formed in its entirety from the blank 48. The blank 48 comprises a central portion 50 from which the head 8 is formed. In the formation of the head 8, and each of the legs 16a, 16b, a first bend 52a, 52b is located at either end 18a, 18b of the central portion 50. Both legs 16a, 16b are bent downward about this first bend 52a, 52b in the same direction, thus forming the channel 10 defined by the head 8.

Each leg 16a, 16b extends to distal end 20a, 20b and forms a respective tab portion 54a, 54b. U-shaped slots 56a, 56b are punched centrally within each tab portion 54a, 54b, the tongues of which form the respective tabs 26a, 26b. Each tab 26a, 26b is bent outwardly, away from the tab 26a, 26b, about a second bend 58a, 58b located at the base of each tongue. The tab portions 54a, 54b are also curved such that the inner surface 34a, 34b of each tab portion 54a, 54b, which face towards one another, is concave in nature. This curvature is formed about a third bend 60a, 60b disposed along the extended length of each tab portion 54a, 54b.

Arms 22a, 22b extend away from a side 36a, 36b of each of the tab portions 54a, 54b to respective curved distal ends 44a, 44b. The arms 22a, 22b are connected to the tab portions 54a, 54b at a position between the first bend 52a, 52b and the U-shaped slot 56a, 56b. Thus the arms 22a, 22b are intermediate the tab 26a, 26b and the head 8. A fourth bend 62a, 62b is located on each of the arms 22a, 22b, adjacent the tab portion 54a, 54b, about which the arm 22a, 22b is bent. This bending occurs in an inverse direction to that of the tab portion 54a, 54b around the third bend 60a, 60b. By virtue of this curvature the radial projection of the arms 22a, 22b from the cable tie mount 2 is increased.

**It** will be appreciated that in further embodiments various modifications to the specific arrangements described above and shown in the drawings may be made. For example, whilst the push-fit cable mount 2 comprises a pair of legs 16a, 16b, from which arms 22a, 22b and tabs 26a, 26b extend, it is envisioned that an embodiment with a single leg (not shown) would also provide an appropriate solution. As with the leg 16a, the single leg extends from an end of the head 8 to a distal end. At least one arm extends sidewardly from the single leg to engage with the mounting surface 24. Additionally, at least one tab extends outwardly from the single leg to engage with the opposite surface 28 of the panel 6. The single leg may project around the circumference of aperture such that it is substantially cylindrical. This cylindrical geometry combined with the tab and the arm axially secures the cable tie mount relative to the panel 6. The inclusion of further legs (with associated extending tabs and arms) may improve the stability of the cable tie mount.

## Claims

1. A one-piece mount for mounting a cable tie to a mounting surface, the mount comprising:
a head section formed at a first end of the mount to define a channel for receiving the strap of a cable tie;
a pair of legs extending longitudinally from the head to a second end of the mount;
a pair of locating arms associated respectively with the pair of legs, each arm extending laterally from the respective leg;
a pair of spring tabs associated respectively with the pair of legs, each spring tab extending outwardly from the respective leg, and movable towards the respective leg from an expanded configuration to a compressed configuration; and
wherein the spring tabs and the arms are spaced apart lengthwise along the legs, the arms are positioned towards the first end relative to the spring tabs and are arranged to engage and locate against the outside of a mounting surface and the spring tabs are arranged to engage an underside of the mounting surface when the legs are inserted therethrough.

2. A one-piece mount according to claim 1 wherein each spring tab is bent away from the respective leg such that it extends outwardly away from the respective leg and is angled upwardly towards the first end.

3. A one-piece mount according to any preceding claim wherein each tab is formed from an inboard portion of the respective leg.

4. A one-piece mount according to claim 3 wherein each spring tab is punched and resiliently bent from said inboard section of the respective leg.

5. A one-piece mount according to any preceding claim wherein the tabs are resiliently biassed to the expanded position.

6. A one-piece mount according to any preceding claim wherein the legs terminate at the second end and the tabs are spaced lengthwise from the second end.

7. A one-piece mount according to any preceding claim wherein the arms extend laterally from the legs at a longitudinal position proximate the head.

8. A one-piece mount according to any preceding claim wherein the arms extend from opposing sides of the mount in opposing directions.

9. A one-piece mount according to any preceding claim wherein the head has a first width and the legs have a second width that is greater than the first width.

10. A one-piece mount according to any preceding claim wherein the legs have longitudinally extending sides and each arm projects from a side of the respective leg.

11. A one-piece mount according to any preceding claim wherein the legs are spaced to define a compression gap.

12. A one-piece mount according to any preceding claim wherein the head, the pair of legs, and the pair of arms are integrally formed from a single blank of metal.

13. A one-piece mount according to any preceding claim wherein each leg has a longitudinal axis and a curved convex cross sectional shape perpendicular to the respective longitudinal axis.

14. A one-piece mount according to claim 13, wherein the proximal end of each arm extends from the respective leg in a direction substantially perpendicular to the longitudinal axis and the distal end extends downwardly towards the second end.

15. A one-piece mount according to any preceding claim, wherein the distal end of each arm extends downwardly and terminates at an engagement tip.

16. A one-piece mount according to any preceding claim, wherein the distal ends of the legs are tapered.

17. A one-piece mount according to any preceding claim, wherein the mount is formed from a single elongate blank, the head portion being formed by virtue of first and second bends; and the pair of legs extending from the first and second bends respectively to a distal end and the spring tabs being formed from portions of the legs inwardly of the sides and ends of the legs by third and fourth bends respectively.

18. A one-piece mount according to claim 17, wherein the third and fourth bends are parallel to the first and second bends.
